# FASCICULE DE BREVET EUROPEEN

(11) **EP 3 319 852 B1**
(45) Date de publication et mention de la délivrance du brevet: **08.07.2026**
(21) Numéro de dépôt: 16702190.6
(22) Date de dépôt: 14.01.2016
(51) Int. Cl.: B60W 10/06, B60W 20/00, B60W 50/00, B60W 20/10, B60K 6/48

(54) **PROCÉDÉ D'ANTICIPATION DU DÉMARRAGE D'UN MOTEUR THERMIQUE**
VERFAHREN ZUM VORAUSSCHAUENDEN STARTEN EINES VERBRENNUNGSMOTORS
METHOD FOR THE ANTICIPATORY STARTING OF A THERMAL ENGINE

(30) Priorité: 07.07.2015 FR 1556428
(43) Date de publication de la demande: 16.05.2018
(73) Titulaire: Renault s.a.s, 92100 Boulogne Billancourt (FR); Nissan Motor Co., Ltd., Yokohama-shi, Kanagawa 221-0023 (JP)
(72) Inventeur: LE CAM, Florent, 91510 Lardy (FR); ROUDEAU, Frédéric, 94400 Vitry sur Seine (FR)
(74) Mandataire: Touroude, Magali Linda
(86) Numéro de dépôt international: PCT/FR2016/050060
(87) Numéro de publication internationale: WO 2017/005996

(56) Documents cités:
- DE-A1- 102009 045 567
- GB-A- 2 508 670
- US-A1- 2005 211 479

## Description

La présente invention se rapporte à la commande des groupes motopropulseurs hybrides, comportant au moins un moteur thermique et une machine électrique de traction, et une transmission automatique reliée aux roues du véhicule.

Plus précisément, elle a pour objet un procédé d'anticipation du démarrage du moteur thermique dans un groupe motopropulseur hybride comportant au moins un moteur thermique, une machine électrique de traction, et une transmission automatique transmettant la puissance motrice aux roues du véhicule dans au moins un état initial de sa chaîne cinématique où la machine électrique de traction assure seule la traction du véhicule et le moteur thermique est coupé, et au moins un autre état cible où le moteur thermique fournit une puissance de traction.

Le groupe motopropulseur d'un véhicule automobile équipé d'une transmission automatique, dispose d'un certain nombre d'états de chaîne cinématique (ECC) , définis par des combinaisons spécifiques de réducteurs, de coupleurs et d'organes de puissance disponibles sur véhicule. Un objectif du pilotage de la transmission, est de placer en toutes circonstances le GMP sur l'état de chaîne cinématique optimal, quelles que soient les conditions de roulage. Les contraintes de pilotage pour garantir le comportement souhaité, sont entre autres la limitation du bruit et des vibrations (NVH pour « Noise Vibration and Harshness ») , les limites de fiabilité des composants mécaniques, l'optimisation du brio (réserve d'accélération, demande du conducteur, etc.) . Enfin, dans un véhicule hybride comprenant par définition au moins deux sources de puissance motrice, dont un moteur thermique, la chaîne cinématique dispose généralement d'au moins un état où le moteur thermique n'est pas nécessaire (et souvent éteint), pour limiter la consommation de carburant.

Lorsque la chaîne cinématique passe d'un état où il est éteint, vers un état où il est utilisé pour assurer ou participer à la traction du véhicule et au respect de la requête d'accélération, son démarrage n'est pas instantané. Il y a un délai entre le choix d'un nouvel état ciblé, et la disponibilité du moteur thermique, dû à son temps de démarrage.

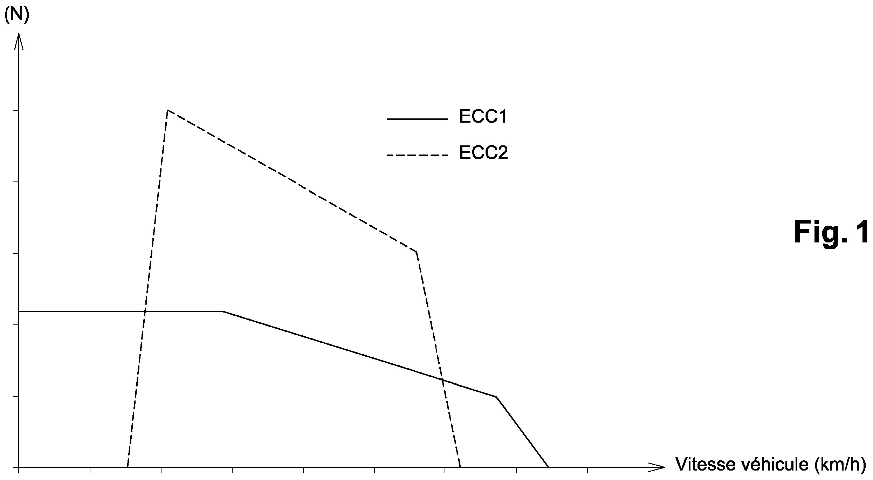

La figure 1 illustre les différences pouvant exister dans la plupart des cas, entre les enveloppes maximales de force des états de chaîne cinématique d'une même transmission, en fonction de la vitesse d'un véhicule. Dans cet exemple, la force disponible à la roue est beaucoup moins importante sur un premier état ne nécessitant pas le moteur thermique comme source de puissance (Etat Chaîne Cinématique électrique ECCl), que sur un deuxième état ECC2 thermique ou hybride. Toutefois, l'état ECC2 n'est disponible qu'à des vitesses supérieures à la vitesse de lancement du véhicule réalisé par l'ECCl, soit quand le moteur thermique peut être couplé aux roues sans risque de calage. L'état ECCl, qui fournit à la roue une force maximale d'origine purement électrique (ZEV), ne couvre pas l'ensemble de l'enveloppe de force maximale du groupe motopropulseur en mode hybride ou thermique.

Lorsqu'un passage d'un état électrique vers un état hybride ou thermique est déclenché pour suivre l'évolution de la requête de couple à la roue, le démarrage du moteur thermique n'est pas instantané. Il est alors possible que le temps de changement d'état soit suffisamment long pour que le nouvel état dépasse sa limite de fiabilité, car sa vitesse est trop élevée pour pouvoir coupler le nouvel état. Ceci retarde d'autant la mise à disposition du couple désiré par le conducteur.

Par les publications US 2005/211479 et US 7 407 026, on sait envoyer une requête anticipée de démarrage au moteur thermique, en prédiction d'un changement d'état de la chaîne cinématique entraînant son démarrage. Cette méthode consiste à calculer la force disponible à la roue sans le moteur thermique, à l'instant où il aurait démarré. La force disponible peut alors être comparée avec la requête de force à la roue, supposée constante.

Cette méthode ne peut fonctionner que si la transmission n'a qu'un seul état de chaîne cinématique électrique. Par ailleurs, elle ne prend pas en compte les éventuelles variations de puissance de la machine électrique sur cet état. Elle provoque le démarrage du moteur thermique lorsqu'il est nécessaire, mais elle ne permet pas de minimiser le délai entre le choix d'un état hybride ou thermique, et la disponibilité du moteur thermique pour la réalisation de la transition et la réalisation du couple requis à la roue.

La présente invention vise à atteindre cet objectif.

Dans ce but, elle prévoit d'envoyer au moteur thermique une requête de démarrage anticipée en fonction de l'accélération longitudinale du véhicule et de son temps de démarrage, avant chaque changement d'état de la chaîne cinématique entre un état initial ne nécessitant pas un moteur thermique démarré, et un état cible nécessitant son démarrage. La présente invention propose ainsi un procédé d'anticipation du démarrage du moteur thermique dans un groupe motopropulseur hybride comportant au moins un moteur thermique, une machine électrique de traction, et une transmission automatique transmettant la puissance motrice aux roues du véhicule dans au moins un état initial de sa chaîne cinématique où la machine de traction assure seule la traction du véhicule et le moteur thermique est coupé, et au moins un autre état cible où le moteur thermique fournit une puissance de traction, selon lequel on envoie au moteur thermique une requête de démarrage anticipée en fonction de l'accélération longitudinale du véhicule et de son temps de démarrage, avant chaque changement d'état de la chaîne cinématique entre un état initial ne nécessitant pas un moteur thermique démarré, et un état cible nécessitant son démarrage, dans lequel :
- on calcule une force maximale à la roue sur chaque état de la chaine cinématique, à partir de la puissance maximale sur cet état, et de la vitesse anticipée, correspondant au moment de démarrage effectif du moteur thermique
- on détermine la force maximale anticipé à la roue sur chaque état de la chaine cinématique, après le temps nécessaire au démarrage du moteur thermique, la force maximale anticipée à la roue sur chaque état étant égale au terme le moins élevé, entre la force maximale calculée et une force maximale calibrée
- on la compare avec la requête de force à la roue cible correspondant à la requête du conducteur et/ou des aides à la conduite, et
- les conditions nécessaires au déclenchement d'une requête anticipée de démarrage du moteur thermique sont qu'il soit éteint, et que les états de motricité électriques du groupe motopropulseur soient incapables de fournir la requête de force à la roue cible, la force maximale anticipé à la roue étant strictement inférieure à la requête de force à la roue cible pour chaque état de motricité électrique.

La méthode repose sur un calcul de la force disponible à la roue sur les états non thermiques ou non hybrides à l'instant prévisible du démarrage du moteur thermique, en tenant compte du temps nécessaire à ce démarrage, et à comparer cette force avec la requête de force cible à la roue.

Cette méthode est applicable sur l'ensemble des véhicules hybrides équipés d'une transmission automatique, dont le groupe motopropulseur dispose d'au moins un état de chaîne cinématique ne nécessitant pas un moteur thermique démarré et d'au moins un état nécessitant son démarrage.

La présente invention sera mieux comprise à la lecture de la description suivante d'un mode de réalisation non limitatif de celle-ci, en se reportant aux dessins annexé, sur lesquels :
- la figure 1 illustre les différences existant entre deux états de chaîne cinématique (ZEV, et Thermique ou Hybride) ,
- la figure 2 est un logigramme de la stratégie développée,
- la figure 3 est un premier sous-logigramme ***F1*** de la stratégie développée, et
- la figure 4 est un deuxième sous-logigramme ***F2*** de la stratégie développée.

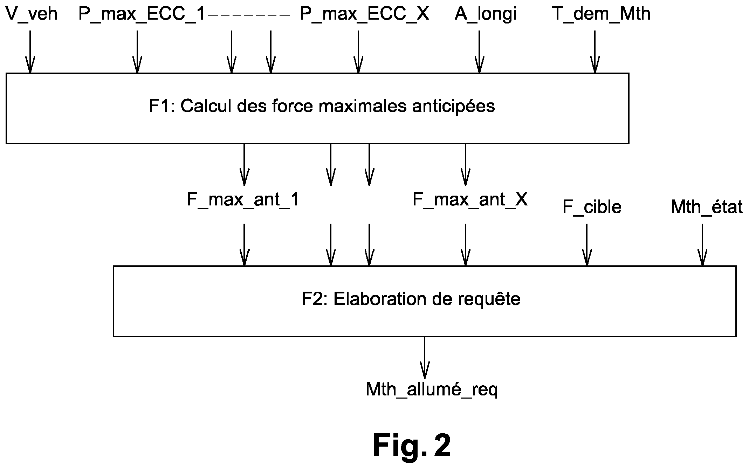

La figure 2 présente l'ensemble des données intervenant dans la première phase ***F1*** du procédé, permettant le calcul des forces maximales anticipées :
- ***V***_***veh*** : vitesse du véhicule,
- ***P*_*max*_*ECC*_*1*** à **P_max_ECC_X,** puissance maximale disponible sur les états non thermiques ou hybrides ***ECC1* à *ECCX,*** de la chaîne cinématique,
- ***A_longl*** : l'accélération longitudinale du véhicule,
- ***T*_*dem_Mth*** : temps de démarrage du moteur thermique variant principalement en fonction de la température du moteur thermique, estimée par exemple à partir de la température du liquide de refroidissement.

Les forces maximales anticipées sur chaque état ***F*_*max*_*ant*_*1*** à ***F*_*max*_*ant*_*X sont*** calculées dans la première étape ***F1**.* Elles sont exploitées dans la deuxième étape ***F2,*** qui utilise aussi la requête de force cible à la roue ***F_cible,*** et l'état du moteur thermique ***Mth_état*** (éteint ou en fonctionnement). La force cible à la roue ***F*_*clble*** est supposée constante jusqu'au démarrage du moteur thermique. L'étape ***F2*** élabore la requête de démarrage anticipé du moteur thermique, ***Mth*_*allumé*_*req.***

Cette méthode permet d'anticiper le démarrage du moteur thermique dans un groupe motopropulseur hybride comportant au moins un moteur thermique, une machine électrique de traction, et une transmission automatique transmettant la puissance du moteur thermique et/ou de la machine électrique aux roues du véhicule dans au moins un état initial de sa chaîne cinématique où la machine électrique de traction assure seule la traction du véhicule et le moteur thermique est non démarré, et au moins un autre état cible où le moteur thermique fournit une puissance de traction.

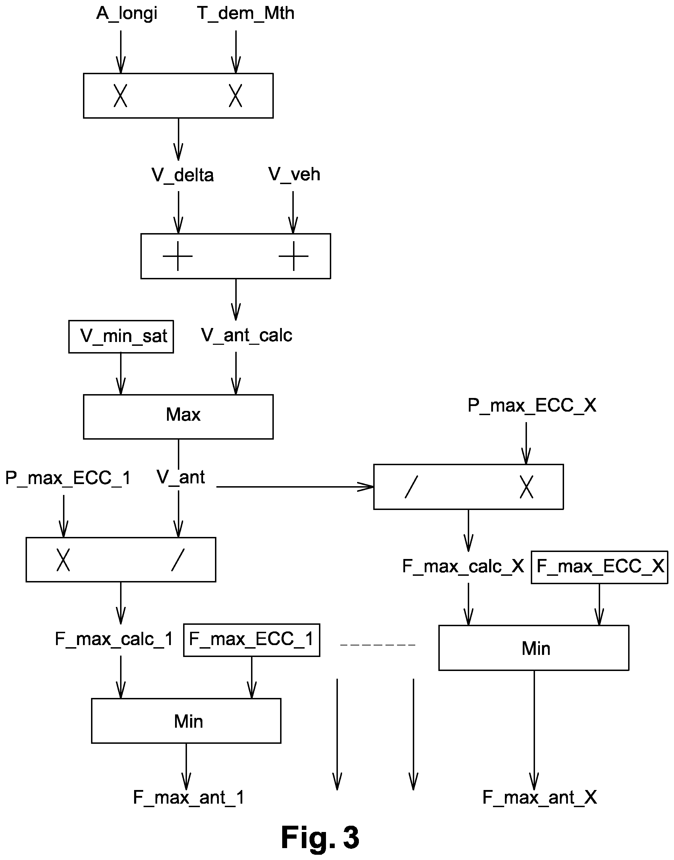

La figure 3 détaille la première étape ***F1.*** On y calcule une force maximale à la roue ***F_max_calc_X*** sur chaque état X de la chaîne cinématique, à partir de la puissance maximale ***P*_*max*_*ECC*_*X*** sur cet état, et de la vitesse anticipée ***V*_*ant*** lors du démarrage effectif du moteur. La vitesse anticipée ***V_ant*** est calculée à partir d'une vitesse atteinte estimée après le démarrage du moteur thermique ***V*_*ant*_*calc,*** obtenue à partir du gain de vitesse ***V_delta*** estimé avant le démarrage du moteur thermique.

La vitesse anticipée ***{V_ant)*** est égale au terme le plus élevé, entre la vitesse estimée calculée ***{V*_*ant*_*calc)*** et une vitesse minimale calibrée ***(V_min_sat)** .*

Le gain de vitesse ***{V*_*delta)*** est estimé à partir de l'accélération longitudinale ***(A*_*longl)*** et du temps de démarrage du moteur thermique ***(T*_*dem*_*Mth***).

Les différentes sous-étapes étapes de calcul de ***F1*** sont :
a) le calcul du gain de vitesse estimé pendant le démarrage du moteur thermique ***V*_*delta*,** à partir de l'accélération longitudinale ***A_longi*** et du temps de démarrage du moteur thermique **T_dem_Mth** : ***V_delta = A_longi * T_dem_Mth** ;*
b) le calcul de la vitesse atteinte estimée après le démarrage du moteur thermique ***V*_*ant*_*calc*** à partir du gain de vitesse **V_delta** et de la vitesse véhicule ***V*_*veh*** : ***V*_*ant*_*****calc** =* ***V*_*delta + V*_*veh* ;**
c) le calcul de la vitesse atteinte estimée saturée ***V*_*ant*** à partir d'une vitesse minimale calibrée ***V*_*min*_*sat* et** de ***V*_*ant*_*calc: V*_*ant = MAX (V*_*mln*_*sat ; V*_*ant*_*calc) ;***
d) pour chaque état concerné 1 à X, le calcul de la force maximale à la roue ***F*_*max*_*calc*_*X*** à partir de la puissance maximale ***P***_***max***_***X*** et de la vitesse anticipée saturée ***V*_*ant : F*_*max*_*calc*_*****X** =* ***P*_*max*_*X*/*V*_*ant ;***
e) pour chaque état concerné 1 à X, le calcul de la force maximale à la roue saturée ***F*_*max*_*ant*_*X*** à partir de ***F*_*max*_*calc*_*X*** et d'une force maximale calibrée, ***F*_*max*_*ant*_*X = MIN (F*_*max*_*ECC*_*X ; F*_*max*_*calc*_*X).***

La méthode repose sur un calcul de la force disponible à la roue sur les états non thermiques ou non hybrides après le temps ***T_dem_Mth*** nécessaire au démarrage du moteur thermique, et à comparer cette force avec la force cible à la roue ***F*_*clble*.**

La force maximale anticipée à la roue sur chaque état ***F***_***max*_*ant*_*X*** (égale à la force maximale à la roue saturée calculée en e)), est égale au terme le moins élevé, entre la force maximale calculée ***F***_ ***max*_*calc*_*X*** et une force maximale calibrée **(F_max_ECC_X).**

La vitesse minimale calibrée ***V*_*min_sat,*** introduite en c), permet d'éviter des opérations impossibles dans le déroulement de la stratégie. La variable ***F*_*max*_*ant*_*X*** représente la force maximale anticipée sur l'état X. C'est la force maximale dont on disposerait au bout du délai ***T***_***dem***_***Mth,*** si le moteur thermique était démarré immédiatement.

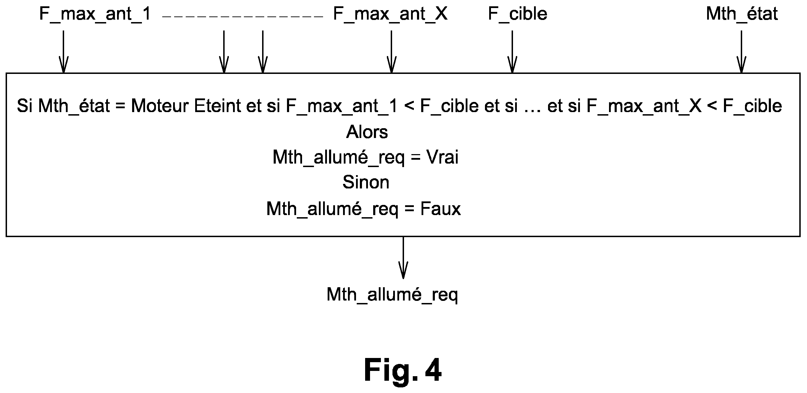

La figure 4 illustre la deuxième étape ***F2*.** Cette étape consiste à élaborer la requête de démarrage anticipée du moteur thermique ***Mth_allumé_req.*** Pour cela, on détermine la force maximale anticipée à la roue ***(F*_*max*_*ant*_*X)*** sur chaque état de la chaîne cinématique, et on la compare à la requête de force à la roue cible ***{F_cible)**.*

Les conditions nécessaires à la décision de démarrage du moteur thermique par la commande ***Mth_allumé_req*** sont les suivantes :
- moteur éteint : ***Mth_état = Eteint,***
- états de motricité purement électriques de la chaîne cinématique (non hybrides et non thermiques) incapables de fournir la requête de force cible à la roue : ***F*_*max*_*ant*_*****1** <* ***F*_*cible*** et ... ***F*_*max*_*ant*_*****X** <* ***F*_*cible.***

Cette dernière condition implique qu'un état hybride ou thermique fournisse une puissance plus importante que l'ensemble des états électriques. Si les deux conditions sont remplies, alors la requête de démarrage ***Mth_allumé_req*** devient **« *vraie* »*.*** Dans le cas contraire, la requête reste à « ***faux*** »*.* Au final, on envoie une requête de démarrage anticipée ***Mth_allumé_req*** au moteur en fonction de l'accélération longitudinale du véhicule ***A_longi*** et de son temps de démarrage ***T_dem_Mth,*** avant chaque changement d'état de la chaîne cinématique, entre un état initial ne nécessitant pas de moteur thermique démarré, et un état cible nécessitant son démarrage.

La méthode proposée présente plusieurs avantages, parmi lesquels :
- sa facilité d'implantation dans une stratégie globale de pilotage de transmission,
- son exécution en temps réel, permettant de prendre en compte des paramètres évolutifs du véhicule, tels que les puissances maximales sur les états de la chaîne cinématique, l'accélération du véhicule, la pente de la route , etc . ,
- son application potentielle sur toutes les architectures GMP Hybrides avec au moins deux états de chaîne cinématique dont un moteur thermique allumé et l'autre moteur thermique éteint.

## Revendications

1. Procédé d'anticipation du démarrage du moteur thermique dans un groupe motopropulseur hybride comportant au moins un moteur thermique, une machine électrique de traction, et une transmission automatique transmettant la puissance motrice aux roues du véhicule dans au moins un état initial de sa chaîne cinématique où la machine de traction assure seule la traction du véhicule et le moteur thermique est coupé, et au moins un autre état cible où le moteur thermique fournit une puissance de traction, selon lequel on envoie au moteur thermique une requête de démarrage anticipée (Mth_allumé_req) en fonction de l'accélération longitudinale du véhicule (A_longi) et de son temps de démarrage (T_dem_Mth), avant chaque changement d'état de la chaîne cinématique entre un état initial ne nécessitant pas un moteur thermique démarré, et un état cible nécessitant son démarrage, **caractérisé en ce que** :
- On calcule une force maximale à la roue (F_max_calc_X) sur chaque état de la chaine cinématique, à partir de la puissance maximale (P_mac_ECC_X) sur cet état, et de la vitesse anticipée (V_ant), correspondant au moment de démarrage effectif du moteur thermique
- On détermine la force maximale anticipé à la roue (F_max_ant_X) sur chaque état de la chaine cinématique, après le temps (T_dem_Mth) nécessaire au démarrage du moteur thermique, la force maximale anticipée à la roue sur chaque état *(F_max_ant_X)* étant égale au terme le moins élevé, entre la force maximale calculée (F_max_calc_X) et une force maximale calibrée *(F*_*max*_*ECC*_*X)*
- On la compare avec la requête de force à la roue cible (F_cible) correspondant à la requête du conducteur et/ou des aides à la conduite, et **en ce que**
- Les conditions nécessaires au déclenchement d'une requête anticipée de démarrage du moteur thermique (Mth_allumé_req) sont qu'il soit éteint, et que les états de motricité électriques du groupe motopropulseur soient incapables de fournir la requête de force à la roue cible (F_cible), la force maximale anticipé à la roue (F_max_ant_X) étant strictement inférieure à la requête de force à la roue cible (F_cible) pour chaque état de motricité électrique.

2. Procédé d'anticipation selon la revendication 1, **caractérisé en ce que** la requête de force à la roue cible (F_cible) est supposée constante jusqu'au démarrage du moteur thermique.

3. Procédé d'anticipation selon l'une des revendications précédentes, **caractérisé en ce qu'**on calcule une vitesse atteinte estimée après le démarrage du moteur thermique à partir du gain de vitesse (V_delta) estimé pendant le démarrage du moteur thermique.

4. Procédé d'anticipation selon la revendication 3, **caractérisé en ce que** la vitesse anticipée *{V_ant)* est égale au terme le plus élevé, entre la vitesse estimée calculée (V_ant_calc) et une vitesse minimale calibrée *(V*_*man*_*sat) .*

5. Procédé d'anticipation selon l'une des revendications 3 ou 4, **caractérisé en ce que** le gain de vitesse {V_delta) est estimé à partir de l'accélération longitudinale *(A_longi)* et du temps de démarrage du moteur thermique *(T*_*dem*_*Mth)*.

## Patentansprüche

1. Antizipationsverfahren für den Start des Verbrennungsmotors in einem Hybridantriebsstrang, umfassend mindestens einen Verbrennungsmotor, eine elektrische Traktionsmaschine und ein Automatikgetriebe, das die Antriebsleistung in mindestens einem Anfangszustand seines Antriebsstrangs, in dem die Traktionsmaschine allein die Traktion des Fahrzeugs sicherstellt und der Verbrennungsmotor abgeschaltet ist, und mindestens einem anderen Zielzustand, in dem der Verbrennungsmotor eine Traktionsleistung bereitstellt, auf die Räder des Fahrzeugs überträgt, wobei an den Verbrennungsmotor eine antizipierte Startanforderung (Mth_allumé_req) in Abhängigkeit von der Längsbeschleunigung des Fahrzeugs (A_longi) und seiner Startzeit (T_dem_Mth) gesendet wird, vor jeder Zustandsänderung des Antriebsstrangs zwischen einem Anfangszustand, der kein Starten des Verbrennungsmotor erfordert, und einem Zielzustand, der seinen Start erfordert, **dadurch gekennzeichnet, dass:**
- eine maximale Kraft an dem Rad (F_max_calc_X) in jedem Zustand des Antriebsstrangs aus der maximalen Leistung (P_mac_ECC_X) in diesem Zustand und der antizipierten Geschwindigkeit (V_ant), die dem Zeitpunkt des tatsächlichen Starts des Verbrennungsmotors entspricht, berechnet wird
- die antizipierte maximale Kraft an dem Rad (F_max_ant_X) in jedem Zustand des Antriebsstrangs nach der für den Start des Verbrennungsmotors erforderlichen Zeit (T_dem_Mth) bestimmt wird, wobei die antizipierte maximale Kraft an dem Rad in jedem Zustand (F_max_ant_X) dem niedrigeren Wert aus der berechneten maximalen Kraft (F_max_calc_X) und einer kalibrierten maximalen Kraft (F*_*max*_*ECC*_*X) entspricht
- diese mit der Zielradkraftanforderung (F_cible) verglichen wird, die der Fahreranforderung und/oder der Anforderung der Fahrerassistenzsysteme entspricht, und **dadurch, dass**
- die notwendigen Bedingungen für die Auslösung einer antizipierten Startanforderung des Verbrennungsmotors (Mth_allumé_req) sind, dass dieser ausgeschaltet ist, und dass die elektrischen Antriebszustände des Antriebsstrangs nicht in der Lage sind, die Zielkraftanforderung an dem Rad (F_cible) bereitzustellen, wobei die antizipierte maximale Kraft an dem Rad (F_max_ant_X) für jeden elektrischen Antriebszustand strikt kleiner als die Zielkraftanforderung an dem Rad (F_cible) ist.

2. Antizipationsverfahren nach Anspruch 1, **dadurch gekennzeichnet, dass** die Zielradkraftanforderung (F_cible) bis zum Starten des Verbrennungsmotors als konstant angenommen wird.

3. Antizipationsverfahren nach einem der vorstehenden Ansprüche, **dadurch gekennzeichnet, dass** eine nach dem Start des Verbrennungsmotors erreichte geschätzte Geschwindigkeit anhand der während des Starts des Verbrennungsmotors geschätzten Geschwindigkeitszunahme (V_delta) berechnet wird.

4. Antizipationsverfahren nach Anspruch 3, **dadurch gekennzeichnet, dass** die antizipierte Geschwindigkeit {V_ant) gleich dem höchsten Wert aus der berechneten geschätzten Geschwindigkeit (V_ant_calc) und einer kalibrierten Mindestgeschwindigkeit (V_man_sat) ist.

5. Antizipationsverfahren nach einem der Ansprüche 3 oder 4,
**dadurch gekennzeichnet, dass** die Geschwindigkeitszunahme {V_delta) aus der Längsbeschleunigung (A_longi) und der Startzeit des Verbrennungsmotors (T_dem_Mth) geschätzt wird.

## Claims

1. Method for anticipating the start of the heat engine in a hybrid powertrain comprising at least one heat engine, an electric traction machine and an automatic transmission transmitting drive power to the wheels of the vehicle in at least one initial state of its drivechain in which the traction machine alone ensures traction of the vehicle and the heat engine is switched off, and at least one other target state in which the heat engine provides traction power, according to which an anticipated start request (Mth_allumé_req) is sent to the heat engine as a function of the longitudinal acceleration of the vehicle (A_longi) and its start time (T_dem_Mth), before each change of state of the drivechain between an initial state not requiring a started heat engine, and a target state requiring its start, **characterized in that:**
- A maximum wheel force (F_max_calc_X) is calculated for each state of the drivechain from the maximum power (P_mac_ECC_X) **in that** state and the anticipated speed (V_ant), corresponding to the moment when the heat engine is actually started
- The maximum anticipated wheel force (F_max_ant_X) is determined for each state of the drivechain after the time (T_dem_Mth) required to start the heat engine, the maximum anticipated wheel force for each state (*F_max_ant_X*) being equal to the lesser of the calculated maximum force (F_max_calc_X) and a calibrated maximum force (*F*_*max*_*ECC*_*X*)
- It is compared with the target wheel force request (F_cible) corresponding to the request from the driver and/or the driving aids, **and in that**
- The prerequisites for triggering an anticipated heat engine start request (Mth_allumé_req) are that the engine is switched off, and that the electric drive states of the powertrain are unable to provide the target wheel force request (F_cible), with the anticipated maximum wheel force (F_max_ant_X) being strictly less than the target wheel force request (F_cible) for each electric drive state.

2. Anticipation method according to claim 1, **characterized in that** the target wheel force request (F_cible) is assumed to be constant until the heat engine is started.

3. Anticipation method according to either of the preceding claims, **characterized in that** an estimated speed reached after the heat engine is started is calculated from the speed gain (V_delta) estimated during starting of the heat engine.

4. Anticipation method according to claim 3, **characterized in that** the anticipated speed {*V_ant*) is equal to the higher of the calculated estimated speed (V_ant_calc) and a calibrated minimum speed (*V_man_sat*)*.*

5. Anticipation method according to one of claims 3 or 4,
**characterized in that** the speed gain {V_delta) is estimated from the longitudinal acceleration (*A*_*longi*) and the starting time of the heat engine (*T*_*dem*_*Mth*).
